# EUROPÄISCHE PATENTSCHRIFT

(11) **EP 2 004 663 B1**
(45) Veröffentlichungstag und Bekanntmachung des Hinweises auf die Patenterteilung: **02.05.2012**
(21) Anmeldenummer: 07727440.5
(22) Anmeldetag: 28.03.2007
(51) Int. Cl.: C07F 15/00

(54) **NEUARTIGE RU-KOMPLEXE, DEREN HERSTELLUNG UND VERWENDUNG**
NOVEL RU COMPLEXES, PRODUCTION AND USE THEREOF
NOUVEAUX COMPLEXES DU RUTHÉNIUM, LEUR PRODUCTION ET LEUR UTILISATION

(30) Priorität: 13.04.2006 DE 102006017594
(43) Veröffentlichungstag der Anmeldung: 24.12.2008
(73) Patentinhaber: Wacker Chemie AG, 81737 München (DE)
(72) Erfinder: HOFMANN, Marco, 84489 Burghausen (DE); EBERLE, Hans-Jürgen, 81477 München (DE); WEIS, Johann, 82054 Sauerlach (DE)
(74) Vertreter: Fränkel, Robert
(86) Internationale Anmeldenummer: PCT/EP2007/052968
(87) Internationale Veröffentlichungsnummer: WO 2007/118774

(56) Entgegenhaltungen:
- WO-A-2006/018649
- WO-A1-96/05207
- US-A1- 2003 040 181
- US-B2- 6 815 518
- DJUROVICH ET AL.: "Synthesis, Structure and CH Bond Activation Chemistry of (eta(6)-arene) Ru (H2)(SiMe3)2 Complexes" ORGANOMETALLICS, Bd. 13, 1994, Seiten 2551-2553, XP002438070 in der Anmeldung erwähnt
- POMEROY R.: "Trichlorosilyl Derivatives of the Iron Triad Carbonyls" JOURNAL OF ORGANOMETALLIC CHEMISTRY, Bd. 177, 1979, Seiten C27-C28, XP002438071 in der Anmeldung erwähnt
- DATABASE CA [Online] CHEMICAL ABSTRACTS SERVICE, COLUMBUS, OHIO, US; BURGIO, JAMES ET AL: "Facile Synthesis and Structures of .eta.6-Arene Bis(silyl) Complexes of Ruthenium(II): (.eta.6-arene)Ru(PPh3)(SiX3)2" XP002438073 gefunden im STN Database accession no. 2003:829950 & ORGANOMETALLICS , 22(24), 4928-4932 CODEN: ORGND7; ISSN: 0276-7333, 2003,
- POMEROY R.: "Restricted Rotation of the Arene Ring in (p- (t-Bu)2C6H4)Ru(CO)(SiCl3)2" CHEM. COMM., 1980, Seiten 661-663, XP009085369 in der Anmeldung erwähnt
- TAKAO, TOSHIRO ET AL: "Substitution Reactions at a Bridging Silicon Ligand. Formation of a Bis(.mu.-silylene) Complex Containing a Trifluoroacetoxy Group. Mechanistic Studies of the Site-Exchange Process of the Hydride Ligands" ORGANOMETALLICS , 24(4), 521-532 CODEN: ORGND7; ISSN: 0276-7333, 2005, XP002453467

## Beschreibung

Die Erfindung betrifft die Herstellung von Ru-KomplexVerbindungen mit silicophilen Liganden und deren Verwendung als Katalysatoren in der Übergangsmetall-katalysierten Hydrosilylierung.

Die Addition von Si-H-funktionellen Verbindungen an Verbindungen mit aliphatischen ungesättigten Bindungen, insbesondere C=C-Doppelbindungen (Hydrosilylierung) ist bereits lange bekannt.

Über die Hydrosilylierung können Si-haltige organische Verbindungen, Organosilane und Organopolysiloxane hergestellt werden. Sie wird insbesondere in der additionsvernetzenden Aushärtung von Organopolysiloxanen in der Silikonindustrie verwendet, beispielsweise zur Herstellung von Elastomeren, Abformmassen in der Dentalindustrie oder von anti-adhäsiven Beschichtungen in der Papier- und Folienindustrie.

Als Katalysatoren für die Hydrosilylierungsreaktion werden am häufigsten Platin und seine Verbindungen verwendet, wobei das Platin entweder in metallischer Form, als auf einem anorganischen Träger fixiertes Metall, als Platinsalz oder in Form eines gegebenenfalls löslichen Platinkomplexes eingesetzt wird.

Bis heute wird für den Großteil der industriell durchgeführten Hydrosilylierungsreaktionen der aus US3715334 und US3775452 bekannte sog. "Karstedt-Katalysator" verwendet, der überwiegend aus einem dimeren Platin-Tetramethyl-divinyl-siloxan-Komplex besteht, beschreibbar durch die Formel [Pt₂(TMDVS)₃] (TMDVS = Tetramethyl-divinyl-disiloxan). Der Karstedt-Katalysator wird ausgehend von Hexachloroplatinsäure H₂PtCl₆ hergestellt, die als alkoholische Lösung ebenfalls häufig als Hydrosilylierungskatalysator eingesetzt wird.

Da Platin eines der teuersten Edelmetalle darstellt, gab es häufig schon Bestrebungen, andere Metalle und deren Verbindungen als Katalysatoren in der Hydrosilylierung einzusetzen. So ist aus dem Stand der Technik bereits die Verwendung der anderen Platingruppenmetalle Pd, Rh, Ir, Ru in der Hydrosilylierung bekannt. Diese wurden als Alternativen zu Pt bisher jedoch vor allem als Katalysatoren zur Verwendung bei speziellen Substraten beschrieben.

So werden beispielsweise in US 2004/0092759 A1 sowie in US 5559264 Ru-Katalysatoren, wie z. B. RuCl₃, RuBr₃, Ru(acac)₃, Ru/C, Ru₃(CO)₁₂, [RuCl₂(CO)₃]₂, [Ru(COD)Cl₂]ₙ (COD = 1, 5-Cyclooctadien), Ru(PPh₃)₂(CO)₂Cl₂ und Ru(PPh₃)₃(CO)H₂ für die Hydrosilylierung von HSi(R)ₓ(OR)₃₋ₓ (x = 0-2) mit einem olefinischen Halogenid, wie Allylchlorid beschrieben.

In EP 0403706 A2 ist die Verwendung von Ru-Komplexen mit mindestens einem tertiären Phosphin-Liganden, wie beispielsweise Ru(CO)₃(PPh₃)₂, RuCl₂(PPh₃)₂, Ru (H)(Cl) (PPh₃)₃, Ru(PPh₃)₄H₂ und Ru(CH₂=CH₂) (PPh₃)₃ als Katalysatoren zur Hydrosilylierung von Allylaminen mit SiH-funktionellen Silanen beschrieben.

US 5248802 beschreibt die Hydrosilylierung von Trichlorsilan mit olefinischen Nitrilen, wie z. B. Acrylnitril in Gegenwart von Ru-Halogen- oder Ru-Phosphin-Verbindungen, wie RuCl₃, RuBr₃, RuI₃, Ru(CO)₃(PPh₃)₂, RuCl₂(PPh₃)₃, Ru(H) (Cl)(PPh₃)₃, RuH₂(PPh₃)₄, Ru(CH₂=CH₂) (PPh₃)₃ und RuCl₂(CO)₂(PPh₃)₂.

In DE 2810032 A1 ist schließlich die Hydrosilylierung von Dichlorsilan mit Olefinen in Gegenwart von Ru-Komplexen, wie beispielsweise RuCl₂(PPh₃)₃, Ru (H) (Cl) (PPh₃)₃, RuH₃(PPh₃)₃[Si(OMe)₃], RuH₃(PPh₃)₃[Si(OMe)₂Ph] und RuH₂(PPh₃)₄ beschrieben.

Aus WO 2006/05207 ist ein Verfahren zur Hydrosylilierung bekannt, bei dem ein Rutheniumkomplex als Katalysator eingesetzt wird, der in seiner Ligandensphäre mindestens einen η⁶-gebundenen Arenliganden (Cymere) und 2 Triethylsilyl-Liganden aufweist.

Aber auch die Verwendung anderer Verbindungen mit Übergangsmetallen, wie Ni, Co oder Fe als Katalysatoren für Hydrosilylierungen ist bereits beschrieben.

In der Regel sind diese Katalysatoren aber den gängigen Pt-Katalysatoren bezüglich der Reaktivität und Selektivität deutlich unterlegen, insbesondere für die Vernetzung von Polysiloxanen über eine Hydrosilylierungsreaktion reicht die Geschwindigkeit und Selektivität der bisher für die Hydrosilylierung beschriebenen Nicht-Pt-Katalysatoren in der Regel nicht aus. Auch aus ökonomischer Sicht sind diese Systeme meist nicht zwangsläufig vorteilhaft, da höhere Katalysatorkonzentrationen bei den Nicht-Platin Katalysatoren angewendet werden müssen, bzw. im Falle von Rhodium mit noch höheren Kosten als bei Platin zu rechnen ist.

Es bestand somit die Aufgabe, einen alternativen Hydrosilylierungskatalysator bereit zu stellen. Insbesondere bestand die Aufgabe, einen Katalysator bereit zu stellen, der sowohl aus ökonomischer Sicht als auch bezüglich der Reaktivität und Selektivität den bisher im Stand der Technik beschriebenen Nicht-Platin-Hydrosilylierungskatalysatoren überlegen ist und somit eine Alternative zu den aus dem Stand der Technik bekannten Pt-Katalysatoren darstellt.

Überraschenderweise wurde gefunden, dass diese Aufgabe durch eine bestimmte Klasse von Ru-Komplexverbindungen gelöst werden kann, die in ihrer Ligandensphäre einen oder mehrere silicophile Liganden sowie einen η⁶-gebundenen Arenligand aufweisen. Der η⁶-gebundene Arenligand kann dabei auch selbst den silicophilen Liganden bilden.

Unter silicophilen Liganden sind im nachfolgenden
(a) direkt an das Rutheniumzentrum gebundene bzw. koordinierte Silyl-Liganden; oder
(b) andere an das Rutheniumzentrum gebundene bzw. koordinierte Liganden, die wiederum Silyl- und/oder Siloxy-Substituenten tragen

### zu verstehen.

Die in der Gruppe (b) silicophiler Liganden vorhandenen Silyl- bzw. Siloxy-Substituenten an dem an das Ruthenium koordinierten Liganden können sich dabei in α-Stellung zur Koordinationsstelle des Liganden befinden oder über einen Spacer an diesen gebunden sein. Vorzugsweise handelt es sich dabei um Kohlenstoff-η-gebundene (olefinische, ungesättigte) Liganden. Unter der Gruppe (b) der silicophilen Liganden sind insbesondere mit Silyl- bzw. Siloxy-Substituenten substituierte η⁶- gebundene Arenliganden hervorzuheben, wobei die Silyl- bzw. Siloxy-Substituenten unmittelbar oder über einen zusätzlichen Spacer an das Aren gebunden sein können. Solche Substituenten stellen gleichzeitig den erfindungsgemäßen η⁶-gebundenen Arenliganden und den silicophilen Liganden vereint in einem Liganden in der Ligandensphäre des Rutheniums dar.

Gleichwohl kann im Falle des Vorhandenseins von silicophilen Liganden der Gruppe (a) der erfindungsgemäß vorhandene η⁶-gebundene Arenligand optional auch zugleich ein Ligand der Gruppe (b) sein.

Gegenstand der Erfindung sind Verbindungen der allgemeinen Formel (4) 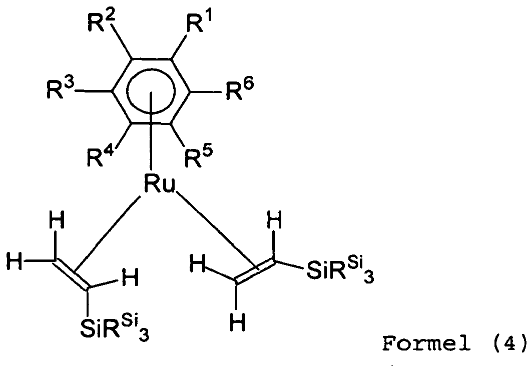 wobei
die beiden SiR^{Si}₃-Reste gleich oder verschieden sein können und dabei R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl(aryl)alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht;
   und die beiden SiR^{Si}₃-Reste optional über jeweils einen Substituenten R^{Si} miteinander verbunden sein können; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ die oben genannte Bedeutung haben soll; und
   zwei benachbarte Reste R¹ bis R⁶ optional einen weiteren Ring bilden können.

Ein weiterer Gegenstand der Erfindung ist ein Verfahren zur Hydrosilylierung in Gegenwart eines Ruthenium-Katalysators nach Formal (4), dadurch gekennzeichnet, dass der Ruthenium-Katalysator ausgewählt wird aus der Gruppe enthaltend Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶-gebundenen Arenliganden aufweisen und mindestens einen weiteren Liganden, an den direkt oder über einen Spacer ein Silyl- oder Siloxy-Rest gebunden ist.

Das Rutheniumzentrum kann in diesen Komplexen prinzipiell in allen für Ruthenium-Organometall-Komplexen gängigen Oxidationsstufen vorliegen, insbesondere in den Oxidationsstufen 0, +II, +III, +IV. Bevorzugt sind Komplexe mit den Oxidationsstufen 0, +II und +IV des Rutheniums.

Die Verwendung der erfindungsgemäßen Verbindungen als Katalysatoren in der Hydrosilylierung zeichnet sich insbesondere dadurch aus, dass es sich um sehr aktive, selektive sowie universell einsetzbare Katalysatoren handelt, die dennoch frei von Platin sind.

Die silicophilen Liganden des Katalysators machen die Verbindung siliconähnlich, führen also dazu, dass der Katalysator in der Regel vollständig in zu hydrosilylierende Silane, Siloxane oder Polysiloxane einmischbar ist und somit vollständig homogene Reaktionsgemische resultieren. Dies führt zu einer hohen Aktivität der Verbindungen. Verbunden mit dieser hohen Aktivität ist in der Regel weiterhin auch eine hohe Hydrosilylierungsselektivität im Sinne vergleichsweise weniger Nebenreaktionen, wie Hydrierung oder dehydrogenierende Silylierung bei gleichzeitig moderaten notwendigen Katalysatorkonzentrationen.

Eine mögliche Ausführungsform von Ru-Komplexen für die erfindungsgemäße Verwendung mit direkt an das Rutheniumzentrum gebundene bzw. koordinierte Silyl-Liganden sind Verbindungen der allgemeinen Formel (1) 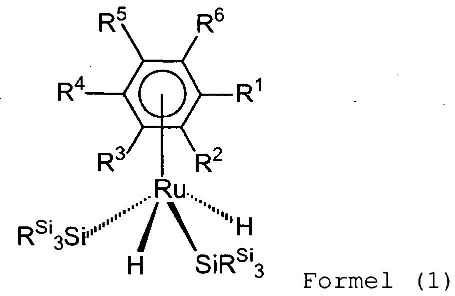 wobei
die beiden Reste SiR^{Si}₃ gleich oder verschieden sein können und R^{Si}₃ insgesamt'für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl(aryl)alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ die oben genannte Bedeutung haben soll; und
zwei benachbarte Reste R¹ bis R⁶ optional einen weiteren Ring bilden können, beispielsweise einen Naphthyl-Rest.
Wenn R¹ bis R⁶ in den Verbindungen der allgemeinen Formel (1) für mit SiR^{Si}₃ und OSiR^{Si}₃-Resten substituierte Reste stehen, so werden diese vorzugsweise aus der Gruppe enthaltend -(CH₂)ₘ-SiR^{Si}₃, -O-SiR^{Si}₃, -O(CH₂)ₙ-SiR^{Si}₃, -(CH₂)ₘ-OSiR^{Si}₃ und -O(CH₂)ₘ-OSiR^{Si}₃ ausgewählt, wobei m für eine ganze Zahl von 1 bis 3 steht und R^{Si}₃ die oben genannte Bedeutung haben soll.

Verbindungen der allgemeinen Formel (1), in denen R^{Si}₃ insgesamt für einen Trialkyl-Rest steht, sind bereits aus dem Stand der Technik als (η⁶-Aren)Ru(H)₂(SiR₃)₂ mit η⁶-Aren = C₆H6, C₆Me₆, *p-*Me-C₆H₄-*i*Pr und R₃ = Me₃ bzw. mit η⁶-Aren = C₆H₆ und R₃ = Et₃ aus Berry et al., Organometallics 1994, 13, 2551 - 2553 bekannt.

Ein weiterer Gegenstand der Erfindung sind Verbindungen der allgemeinen Formel (1a) 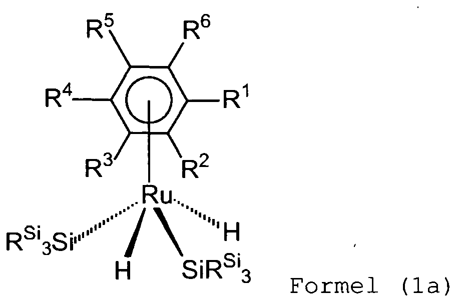 wobei hier
die beiden Reste SiR^{Si}₃ gleich oder verschieden sein können und R^{Si}₃ insgesamt für einen Rest ausgewählt aus der Gruppe enthaltend Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl (aryl) alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ hier aus der oben genannten Gruppe und zusätzlich Trialkyl ausgewählt wird; und
zwei benachbarte Reste R¹ bis R⁶ optional einen weiteren Ring bilden können, beispielsweise einen Naphthyl-Rest.

Wenn R¹ bis R⁶ in den Verbindungen der allgemeinen Formel (1a) für mit SiR^{Si}₃ und OSiR^{Si}₃-Resten substituierte Reste stehen, so werden diese vorzugsweise aus der Gruppe enthaltend -(CH₂)ₘ-SiR^{Si}₃, -O-SiR^{Si}₃, -O(CH₂)ₘ-SiR^{Si}₃, -(CH₂)ₘ-OSiR^{Si}₃ und -O(CH₂)ₘ-OSiR^{Si}₃ ausgewählt, wobei m für eine ganze Zahl von 1 bis 3 steht und R^{Si}₃ dabei die für die allgemein Formel (1a) angegebene Bedeutung haben soll.

Bevorzugte Reste für SiR^{Si}₃ werden dabei ausgewählt aus der Gruppe enthaltend Me(OSiMe₃)₂, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht. Bevorzugt werden die Reste R¹ bis R⁶ ausgewählt aus Wasserstoff (H) und Alkyl.

Konkrete, besonders bevorzugte Ausführungsformen für die erfindungsgemäße Verwendung bzw. für die erfindungsgemäßen Verbindungen sind folgende Verbindungen der Formeln (1b), (1c) und (1d) . 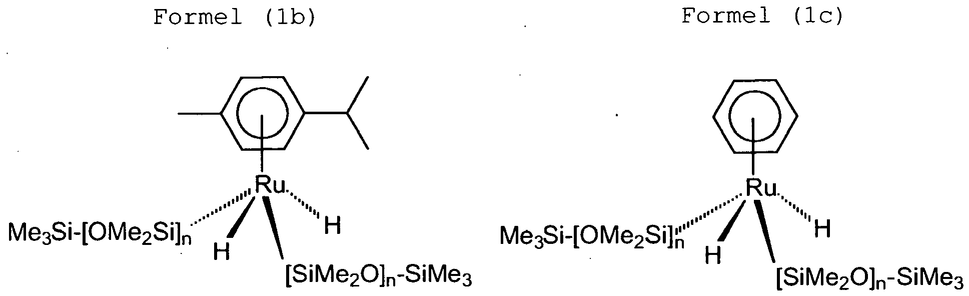 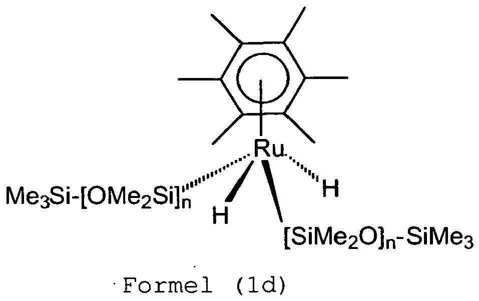 wobei n jeweils für eine Zahl von 1 bis 500 steht.

Eine alternative mögliche Ausführungsform von Ru-Komplexen für die erfindungsgemäße Verwendung mit direkt an das Rutheniumzentrum gebundene bzw. koordinierte Silyl-Liganden sind Verbindungen der allgemeinen Formel (2) 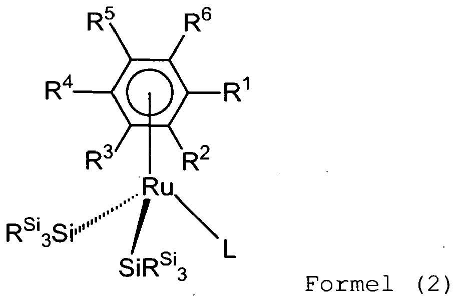 wobei hier
die beiden Reste SiR^{Si}₃ gleich oder verschieden sein können und R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl (aryl) alkoxy, Alkyl(dialkoxy), Aryl (dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ die oben genannte Bedeutung haben soll; und
   zwei benachbarte Reste R¹ bis R⁶ optional einen weiteren Ring bilden können, beispielsweise einen Naphthyl-Rest; und
L für einen neutralen 2-Elektronen-Donator-Liganden steht.

Bevorzugte Ausführungsformen für den neutralen 2-Elektronen-Donator-Liganden L sind dabei CO und Phosphane, insbesondere Trialkyl- oder Triaryl-Phosphane.

Wenn R¹ bis R⁶ in den Verbindungen der allgemeinen Formel (2) für mit SiR^{Si}₃ und OSiR^{Si}₃-Resten substituierte Reste stehen, so werden diese vorzugsweise aus der Gruppe enthaltend -(CH₂)ₘ-SiR^{Si}₃, -O-SiR^{Si}₃, -O(CH₂)ₘ-SiR^{Si}₃, -(CH₂)ₘ-OSiR^{Si}₃ und -O(CH₂)ₘ-OSiR^{Si}₃ ausgewählt, wobei m für eine ganze Zahl von 1 bis 3 steht und R^{Si}₃ die oben genannte Bedeutung haben soll.

Verbindungen der allgemeinen Formel (2), in denen R^{Si}₃ insgesamt für einen Trihalogen-Rest steht und L = CO ist, sind bereits aus dem Stand der Technik als (η⁶-Aren)Ru(CO) (SiCl₃)₂ mit η⁶-Aren = C₆H₅Me, C₆H₄Me₂, C₆H₃Me₃, C₆H₂Me₄, C₆Me₆, C₆H₅ tBu, *p*-C₆H₄-*t*Bu₂, C₆H₅Cl aus Pomeroy et al., J. Organomet. Chem. 1979, 177, C27-C28; Chemical Communications 1980, 661 - 663 bekannt.

Ein weiterer Gegenstand der Erfindung sind Verbindungen der allgemeinen Formel (2a) 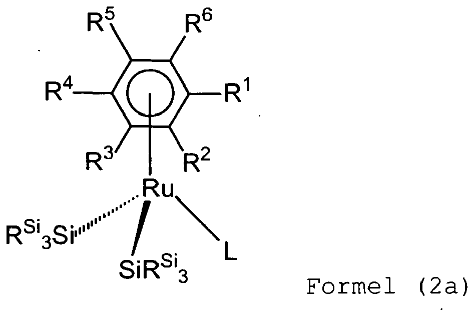 wobei hier
die beiden Reste SiR^{Si}₃ gleich oder verschieden sein können und R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Dialkyl(alkoxy), Diaryl(alkoxy), Alkyl (aryl)alkoxy, Alkyl(dialkoxy), Aryl(dialkoxy), Trialkoxy, Me(OSiMe₃)_{2,} Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ hier aus der oben genannten Gruppe und zusätzlich Trihalogen ausgewählt wird; und
zwei benachbarte Reste R¹ bis R⁶ optional einen weiteren Ring bilden können, beispielsweise einen Naphthyl-Rest; und
L für einen neutralen 2-Elektronen-Donator-Liganden steht.

Bevorzugte Ausführungsformen für einen 2-Elektronen-Donator-Liganden L sind dabei CO und Phosphane, insbesondere Trialkyl- oder Triaryl-Phosphane.

Wenn R¹ bis R⁶ in den Verbindungen der allgemeinen Formel (2a) für mit SiR^{Si}₃ und OSiR^{Si}₃-Resten substituierte Reste stehen, so werden diese vorzugsweise aus der Gruppe enthaltend -(CH₂)ₘ-SiR^{Si}₃, -O-SiR^{Si}₃, -O(CH₂)ₘ-SiR^{Si}₃, -(CH₂)ₘ-OSiR^{Si}₃ und -O(CH₂)ₘ-OSiR^{Si}₃ ausgewählt, wobei m für eine ganze Zahl von 1 bis 3 steht und R^{Si}₃ die für die Verbindungen der allgemeinen Formel (2a) angegebene Bedeutung haben soll.

Bevorzugte Reste für SiR^{Si}₃ werden dabei ausgewählt aus der Gruppe enthaltend Me(OSiMe₃)₂, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht. Bevorzugt werden die Reste R¹ bis R⁶ ausgewählt aus Wasserstoff (H) und Alkyl. Bevorzugt wird L ausgewählt aus der Gruppe enthaltend CO, PPh₃ und PMe₃.

Konkrete, besonders bevorzugte Ausführungsformen für die erfindungsgemäße Verwendung bzw. für die erfindungsgemäßen Verbindungen sind folgende Verbindungen der Formeln (2b), (2c) und (2d). 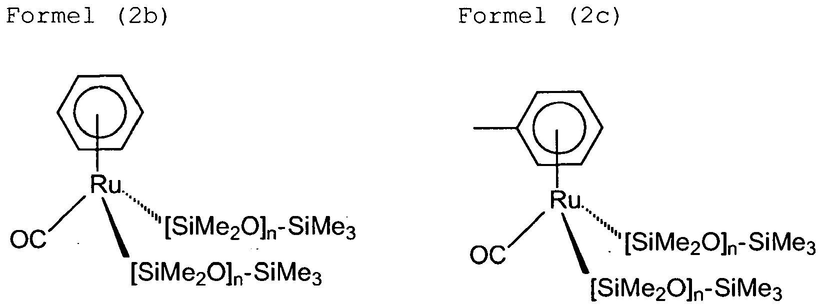 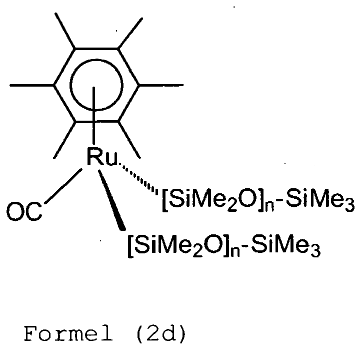 wobei n jeweils für eine Zahl von 1 bis 500 steht.

Im Falle, dass keine direkt an das Rutheniumzentrum gebundene bzw. koordinierte Silyl-Liganden vorliegen, können die erfindungsgemäßen Silyl- und/oder Siloxy-Substituenten prinzipiell an allen dem Fachmann aus dem Stand der Technik bekannten Liganden für Ruthenium als Substituenten gebunden sein. Besonders bevorzugt ist das Vorliegen der Silyl- und/oder Siloxy-Substituenten unmittelbar an den erfindungsgemäßen η⁶-gebundenen Arenliganden. Mögliche Ausführungsformen für solche Ru-Komplexe sind Verbindungen der allgemeinen Formeln (3a), (3b), (3c) und (3d) 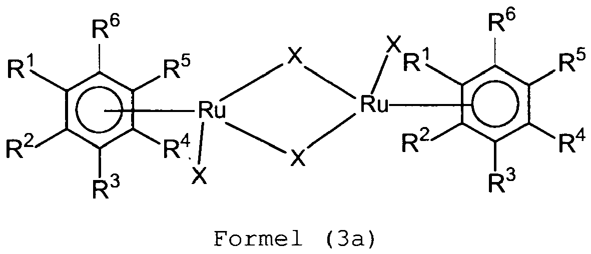 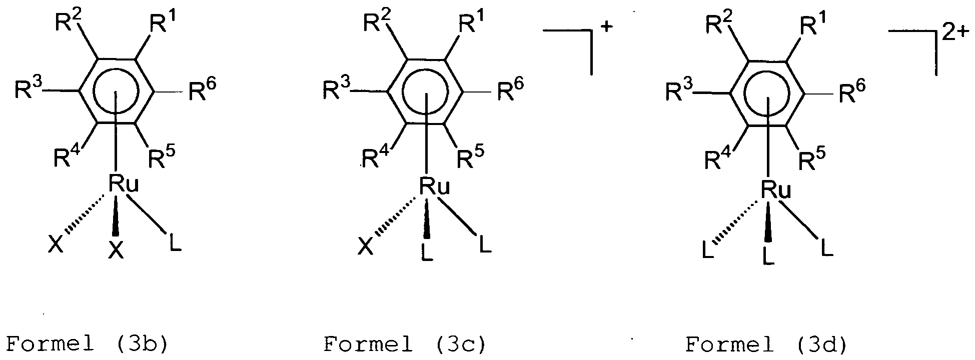 wobei
X für einen anionischen Liganden, insbesondere ausgewählt aus der Gruppe enthaltend Hydrid (H), Halogenid, Alkoxy, Siloxy, Acetat und Trifluoroacetat; und
L für einen neutralen 2-Elektronen-Donator-Liganden steht, bevorzugt ausgewählt aus der Gruppe enthaltend N-funktionelle Liganden, insbesondere Nitrile und Pyridine; P-funktionelle Liganden, insbesondere tertiäre Phosphine, wie beispielsweise Trialkyl- und Triarylphosphine, ditertiäre Phosphine, wie beispielsweise Bis-Diphenylphosphinomethan (dppm) und Bis-Diphenylphosphinoethan (dppe); tertiäre Arsine; tertiäre Stibine; O-Liganden, wie beispielsweise Aceton; S-Liganden, wie beispielsweise DMSO und C-Liganden, wie beispielsweise CO und Isonitrile; und
L und X optional miteinander verknüpft und zusammen mit dem Rutheniumatom, an das sie gebunden sind, einen gegebenenfalls weitere Atome enthaltenden Ring bilden können,
die Reste R¹ bis R⁶ unabhängig voneinander ausgewählt werden aus der Gruppe enthaltend Wasserstoff (H), Alkyl, Aryl, Alkoxy Halogen, SiR^{Si}₃ und OSiR^{Si}₃, wobei die Alkyl-, Aryl- und Alkoxy-Reste optional wiederum mit SiR^{Si}₃ und OSiR^{Si}₃-Resten substituiert sein können und verbunden mit der Maßgabe, dass wenigstens einer der Reste R¹ bis R⁶ für einen SiR^{Si}₃, OSiR^{Si}₃ oder einen mit SiR^{Si}₃, OSiR^{Si}₃ substituierten Alkyl-, Aryl- und Alkoxy-Rest steht; und
vorhandene SiR^{Si}₃ und/oder OSiR^{Si}₃-Reste gleich oder verschieden sein können und dabei R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl(aryl)alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht.

Wenn R¹ bis R⁶ in den Verbindungen der allgemeinen Formel (3a), (3b), (3c) und (3d) für mit SiR^{Si}₃ und OSiR^{Si}₃-Resten substituierte Reste stehen, so werden diese vorzugsweise aus der Gruppe enthaltend -(CH₂)ₘ-SiR^{Si}₃, -O-SiR^{Si}₃, -O(CH₂)ₘ-SiR^{Si}₃, - (CH₂)ₘ-OSiR^{Si}₃ und -O(CH₂)ₘ-OSiR^{Si}₃ ausgewählt, wobei m für eine ganze Zahl von 1 bis 3 steht und R^{Si}₃ die oben genannte Bedeutung haben soll.

Vorzugsweise ist in den Verbindungen der allgemeinen Formel (3a), (3b), (3c) und (3d) ein Rest R¹ bis R⁶ (im Falle von Verbindungen der allgemeinen Formel (3a) jeweils ein Rest R¹ bis R⁶ pro Aren-Ligand) ein SiR^{Si}₃, OSiR^{Si}₃ oder ein mit SiR^{Si}₃, OSiR^{Si}₃ substituierten Alkyl-, Aryl- und Alkoxy-Rest, insbesondere der genannten bevorzugten Ausführungsform.

Im Falle von kationischen Komplexen, wie die der allgemeinen Formel (3c) und (3d), können neben Halogenid, nicht- oder schwach koordinierende Anionen, insbesondere ausgewählt aus der Gruppe enthaltend BF₄⁻, PF₆⁻, BPh₄⁻ eingesetzt werden.

Eine mögliche Ausführungsform in der L und X miteinander verknüpft und zusammen mit dem Rutheniumatom, an das sie gebunden sind, einen Ring bilden, wäre ein Acetylacetonato-Ligand.

Eine mögliche besonders bevorzugte Ausführungsform für eine Verbindung der allgemeinen Formel (3a) ist eine Verbindung der Formel (3e) 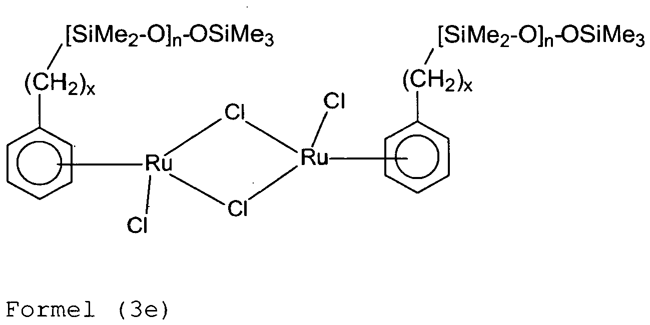 wobei x für eine Zahl von 0 bis 3; und
n für eine Zahl von 1 bis 500 steht.

Eine weitere bevorzugte Ausführungsform für erfindungsgemäße Ru-Komplexe, in denen keine direkt an das Rutheniumzentrum gebundene bzw. koordinierte Silyl-Liganden vorliegen, sind η²-gebundene olefinische Liganden mit Silyl-Substituenten der allgemeinen Formel (4) 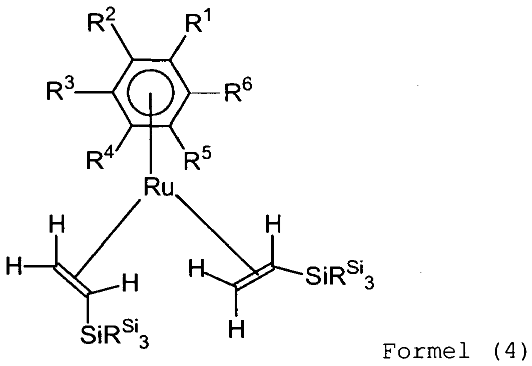 wobei
die beiden SiR^{Si}₃-Reste gleich oder verschieden sein können und dabei R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl (aryl) alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht;
und die beiden SiR^{Si}₃-Reste optional über jeweils einen Substituenten R^{Si} miteinander verbunden sein können; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ die oben genannte Bedeutung haben soll; und
zwei benachbarte Reste R¹ bis R⁶ optional einen weiteren Ring bilden können, beispielsweise einen Naphthyl-Rest.

Mögliche bevorzugte Ausführungsformen sind Verbindungen der allgemeinen Formeln (4a), (4b) und (4c) 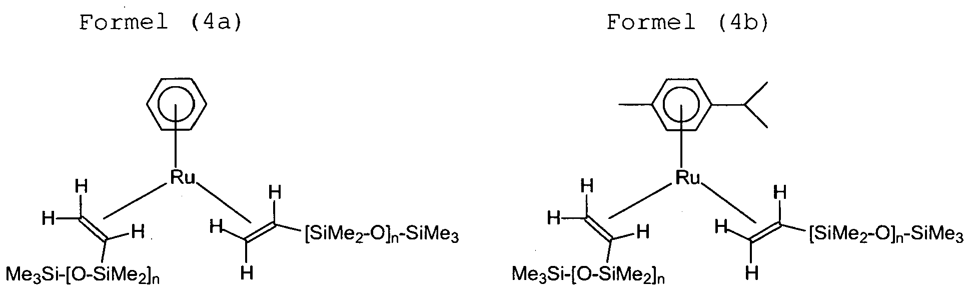 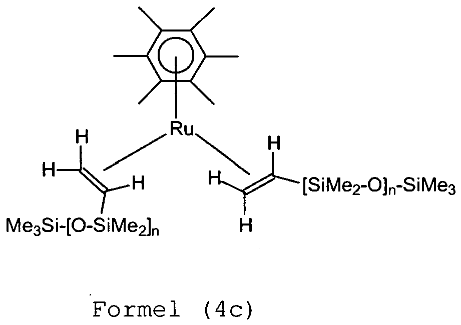 wobei n für eine Zahl von 1 bis 500 steht.

Eine besonders bevorzugte Ausführungsform in der beide SiR^{Si}₃-Reste optional über jeweils einen Substituenten R^{Si} über ein Sauerstoffatom miteinander verbunden sind und so einen zweizähnigen Divinyl-Siloxan-Liganden ausbilden, sind Verbindungen der allgemeinen Formel (5) 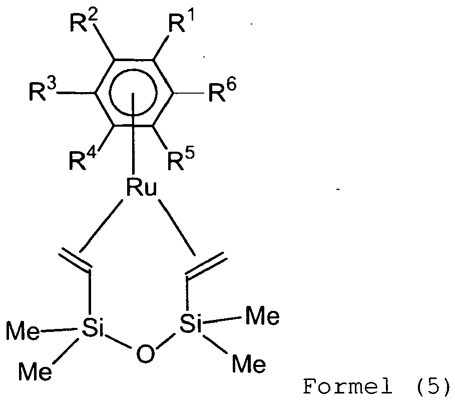 wobei
die Reste R¹ bis R⁶ unabhängig voneinander ausgewählt werden aus der Gruppe enthaltend Wasserstoff (H), Alkyl, Aryl, Alkoxy SiR^{Si}₃ und OSiR^{Si}₃, wobei die Alkyl-, Aryl- und Alkoxy-Reste optional wiederum mit SiR^{Si}₃ und OSiR^{Si}₃-Resten substituiert sein können; und
dabei R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl (aryl) alkoxy, Alkyl(dialkoxy), Aryl(dialkoxy), Trialkoxy, Me(OSiMe₃)_{2,} Ph(OSiMe₃)₂, (OSiMe₃)₃, (Dialkylsiloxy)ₙ-SiMe₃, (Diarylsiloxy)ₙ-SiMe₃ und [Alkyl (aryl)siloxy]ₙ-SiMe₃, wobei n jeweils für eine Zahl von 1 bis 500 steht; und
zwei benachbarte Reste R¹ bis R⁶ optional einen weiteren Ring bilden können, beispielsweise einen Naphthyl-Rest.

Wenn R¹ bis R⁶ in den Verbindungen der allgemeinen Formeln (4) und (5) für mit SiR^{Si}₃ und OSiR^{Si}₃-Resten substituierte Reste stehen, so werden diese vorzugsweise aus der Gruppe enthaltend -(CH₂)ₘ-SiR^{Si}3, -O-SiR^{Si}₃, -O(CH₂)ₘ-SiR^{Si}3, -(CH₂)ₘ-OSiR^{Si}₃ und - O(CH₂)ₘ-OSiR^{Si}₃ ausgewählt, wobei m für eine ganze Zahl von 1 bis 3 steht und R^{Si}₃ die jeweils oben genannte Bedeutung haben soll.

Mögliche bevorzugte Ausführungsformen sind Verbindungen der Formeln (5a), (5b) und (5c).

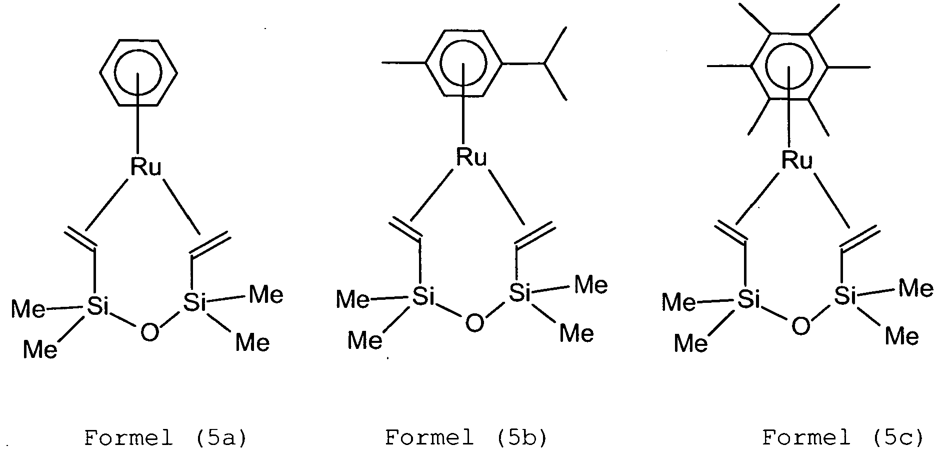

Die folgenden Angaben gelten für sämtliche hierin genannten Ausführungsformen gleichermaßen, insbesondere für die Verbindungen der allgemeinen Formeln (1), (1a), (1b), (1c), (1d) , (2), (2a), (2b), (2c), (2d), (3a) , (3b), (3c), (3d), (3e), (4), (4a), (4b), (4c), (5), (5a), (5b) und (5c).

Besonders bevorzugt sind für die erfindungsgemäße Verwendung bzw. für den Einsatz im erfindungsgemäßen Verfahren neutrale Komplexe.

Besonders bevorzugt sind Komplexe, bei denen R^{Si}₃ für einen Rest ausgewählt aus der Gruppe enthaltend Me(OSiMe₃)₂-, Ph(OSiMe₃)₂-, (OSiMe₃)₃-, (Dialkylsiloxy)ₙ-SiMe₃-, (diarylsiloxy)ₙ-SiMe₃- und [alkyl(aryl)siloxy]ₙ-SiMe₃-Rest steht, wobei n eine Zahl von 1 bis 500 ist, da diese Komplexe eine hohe Ähnlichkeit zu Siloxanen aufweisen. Besonderer Vorteil solcher Ru-Verbindungen ist deren gute Löslichkeit in Polysiloxanen, wie sie bei der Vernetzungsreaktion von Siliconen eingesetzt werden.

n steht im allgemeinen für eine Zahl von 1 bis 500. Bevorzugt ist n eine Zahl von 1 bis 250, besonders bevorzugt eine Zahl von 10 bis 200.

Bevorzugt werden die Reste R¹ bis R⁶ aus der Gruppe enthaltend Wasserstoff (H), Alkyl und mit SiR^{Si}₃-Resten substituierte Alkyl-Reste ausgewählt, wobei R^{Si}₃ wiederum aus den oben genannten bevorzugten Resten ausgewählt wird.

Die Synthese der erfindungsgemäßen Ru-Komplexe kann durch die dem Fachmann aus dem Stand der Technik grundsätzlich bekannten Standardverfahren erfolgen.

Erfindungsgemäße Verbindungen, die in ihrer Ligandensphäre unmittelbar einen Silyl-Liganden aufweisen (direkte Ru-Si-Bindung), insbesondere solche Verbindungen der allgemeinen Formeln (1) und (2), können entweder über
(a) oxidative Addition von SiH-funktionellen Silanen und Siloxanen an geeignete Aren-Ru-Vorstufen erhalten werden (beispielsweise nach J.Y. Corey, J. Braddock-Wilking, Chem. Rev. 1999, 99, 175 - 292); oder
(b) oxidative Addition von SiH-funktionellen Silanen und Siloxanen an geeignete Ru-Vorstufen und nachfolgenden Ligand/Aren-Austausch, wie in Science of Synthesis, 2001, Georg Thieme Verlag, Stuttgart, New York, Band 1, S. 931 - 936 beschrieben, erhalten werden.

Erfindungsgemäße Verbindungen, die in ihrer Ligandensphäre Liganden aufweisen, die wiederum Silyl- und/oder Siloxy-Substituenten tragen, insbesondere solche Verbindungen der allgemeinen Formeln (3) bis (5) können entweder durch Umsetzung gängiger Ruthenium-Precursoren - gegebenenfalls unter gleichzeitiger Reduktion der Ru-Vorstufe mit einem geeigneten Reduktionsmittel, insbesondere Zink, Magnesium und Ethanol (mit Na₂CO₃) - mit entsprechenden Liganden, in die über Standardverfahren der siliciumorganischen Chemie entsprechende Substituenten eingeführt worden sind, insbesondere über Metathesereaktionen unter Einsatz von Grignard-Reagenzien, Lithiumorganylen, Hydrosilylierungen oder Birch-Reduktionen, erhalten werden. Die Herstellung von Ruthenium-Vinyl-Silan- oder Siloxan-Verbindungen der allgemeinen Formel (4) und (5) kann auch über Ligandenaustauschprozesse mit den entsprechenden Vinyl-Silanen und -Siloxanen, gegebenenfalls unter Reduktion der Ru-Vorstufe mit einem geeigneten Reduktionsmittel, insbesondere Zink, Magnesium und Ethanol (mit Na₂CO₃) erfolgen.

Die erfindungsgemäßen Katalysatoren, insbesondere solche der allgemeinen Formeln (1) bis (5), werden im allgemeinen in einer Menge eingesetzt, so dass sich ein Ru-Gehalt von 10 - 1000 ppm, bevorzugt 50 - 500 ppm, bezogen auf die Gesamtmasse der reagierenden Substrate ergibt.

Die Hydrosilylierungsreaktionen unter Verwendung der erfindungsgemäßen Katalysatoren erfolgen im allgemeinen bei Temperaturen zwischen Raumtemperatur, insbesondere 20°C, und 200°C, bevorzugt zwischen 50°C und 160°C, und einem Druck von 900 bis 1100 hPa. Es können aber auch höhere oder niedrigere Temperaturen und Drücke angewendet werden.

Die Hydrosilylierungsreaktionen können entweder an Luft oder unter einer Inertgasatmosphäre (Stickstoff, Argon) durchgeführt werden, bevorzugt ist die Reaktion unter Inertgasatmosphäre.

Das erfindungsgemäße Verfahren bzw. die erfindungsgemäße Verwendung der Ruthenium-Katalysatoren kann allgemein in allen Hydrosilylierungsreaktionen, die dem Fachmann aus dem Stand der Technik bekannt sind und beispielsweise in Walter Noll "Chemie und Technologie der Silicone", Verlag Chemie GmbH, Weinheim/Bergstr. 1968; Bogdan Marciniec, "Comprehensive Handbook on Hydrosilylation", Oxford: Pergamon Press, 1992 beschrieben sind, erfolgen und allgemein in allen aus dem Stand der Technik bekannten hydrosilylierbaren, insbesondere vernetzbaren Zusammensetzungen eingesetzt werden.

Die erfindungsgemäße Verwendung der Katalysatoren bzw. das erfindungsgemäße Verfahren ist sowohl für die Synthese niedermolekularer Verbindungen als auch für das Härten höhermolekularer Verbindungen geeignet, insbesondere von Polymeren mit ungesättigten Gruppen, insbesondere mit Kohlenstoff-Kohlenstoff-Doppelbindungen.

Insbesondere werden solche Hydrosilylierungsreaktionen katalysiert, in denen C=C-funktionelle Polysiloxane mit SiH-funktionellen Polysiloxanen oder C=C-funktionellen Organosilanen mit SiH-funktionellen Organosilanen umgesetzt werden.

Bevorzugt sind vor allem die Umsetzung von vinyl-endständigen Polydimethylsiloxanen mit SiH-funktionellen Polysiloxanen der allgemeinen Formel Me₃SiO-[Si(H)(Me)O]ₓ-SiMe₃, wobei x hier für eine Zahl von 1 bis 500 steht, insbesondere für 1 bis 100 sowie von Si-Vinyl-funktionellen Organosilanen mit Si-H-funktionellen Organosilanen.

Als konkrete Beispiele für Si-vinyl-funktionelle Organosilane, die nach dem erfindungsgemäßen Verfahren bzw. unter der erfindungsgemäßen Verwendung der Katalysatoren hydrosilyliert werden können, seien genannt Vinyltrimethyl-silan, Vinyltriethoxysilan, Vinyl-methyl-diethoxysilan, Vinyl-methyldimethoxysilan, Vinyltrichlorsilan.

Als konkrete Beispiele für SiH-funktionelle Organosilane seien genannt HSi(OR')₃, wobei R' hier für einen Alkyl-Rest steht, HSi(Me)₃₋ₓClₓ, wobei x hier für eine Zahl von 1 bis 3 steht und HSiR''₃, wobei R" hier für einen Alkyl oder Aryl-Rest steht.

Die Erfindung betrifft weiterhin hydrosilylierbare Zusammensetzungen, enthaltend
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) eine Ruthenium-Verbindung, dadurch gekennzeichnet, dass die Ruthenium-Verbindung ausgewählt wird aus der Gruppe enthaltend Ruthenium-Komplexe, die in ihrer Ligandensphäre mindestens einen η⁶-gebundenen Arenliganden und einen Silyl- Liganden aufweisen; Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶-gebundenen Arenliganden aufweisen und mindestens einen weiteren Liganden, an den direkt oder über einen Spacer ein Silyl- oder Siloxy-Rest gebunden ist.

In einer bevorzugten Ausführungsform der hydrosilylierbaren Zusammensetzungen handelt es sich um Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) eine Ruthenium-Verbindung, dadurch gekennzeichnet, dass die Ruthenium-Verbindung ausgewählt wird aus der Gruppe enthaltend Ruthenium-Komplexe, die in ihrer Ligandensphäre mindestens einen η⁶-gebundenen Arenliganden und einen Silyl-Liganden aufweisen; Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶-gebundenen Arenliganden aufweisen und mindestens einen weiteren Liganden, an den direkt oder über einen Spacer ein Silyl- oder Siloxy-Rest gebunden ist.

Die Ruthenium-Verbindung der Komponente (D) fungiert dabei jeweils als Hydrosilylierungskatalysator (Ruthenium-Katalysator). Vorzugsweise werden Verbindungen der allgemeinen Formel (1) bis (5) eingesetzt, insbesondere eine oder mehrere der oben genannten konkreten Ausführungsformen.

Hydrosilylierbare Zusammensetzungen bedeutet dabei insbesondere vernetzbare Zusammensetzungen.

Die zu den hydrosilylierbaren Zusammensetzungen beschriebenen Komponenten (A), (B) bzw. (C) entsprechen den in dem erfindungsgemäßen Verfahren umzusetzenden Verbindungen (Reaktanden). Sowohl den erfindungsgemäßen Zusammensetzungen wie auch dem erfindungsgemäßen Verfahren und der Verwendung liegen die selben erfindungsgemäßen Ruthenium-Katalysatoren zu Grunde.

Das erfindungsgemäße Verfahren zur Hydrosilylierung wird durch Energiezufuhr, insbesondere durch Wärmezufuhr durchgeführt. Gleiches gilt für die erfindungsgemäßen hydrosilylierbaren Zusammensetzungen.

Bevorzugt enthalten die erfindungsgemäßen hydrosilylierbaren Zusammensetzungen Verbindungen mit wenigstens einer aliphatisch ungesättigten Kohlenstoff-Kohlenstoff-Bindung, die ausgewählt werden aus der Gruppe enthaltend Vinyl-funktionelle Organosilane und Vinyl-endständige Polydimethylsiloxane und Verbindungen mit wenigstens einer Silizium-Wasserstoff-Bindung, die ausgewählt werden aus der Gruppe enthaltend SiH-funktionelle Polysiloxane und Si-H-funktionelle Organosilane.

Die Erfindung betrifft ebenfalls Siliconelastomere erhältlich durch Vernetzung der oben beschriebenen'erfindungsgemäßen hydrosilylierbaren Zusammensetzungen, insbesondere der beschriebenen Polyorganosiloxanmassen.

Die Erfindung betrifft ebenfalls Beschichtungen, insbesondere anti-adhäsive Beschichtungen, beispielsweise zum Herstellen von Trenn-, Abdeck- und Mitläuferpapieren erhältlich durch Vernetzung der oben beschriebenen erfindungsgemäßen hydrosilylierbaren Zusammensetzungen, insbesondere der beschriebenen Polyorganosiloxanzusammensetzungen.

Die Erfindung betrifft ebenfalls mit dem erfindungsgemäßen Verfahren hergestellte Polysiloxan- oder Organosilan-Zusammensetzungen, die beispielsweise zum Herstellen von Dentalabdrücken, Klebstoffen, Release-Liner, Flachdichtungen, Dichtungsmittel und Beschichtungen verwendbar sind.

Die in den erfindungsgemäßen Massen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinyl-cyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopro-penylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxy-methyl)-propan-triacrylat, 1,1,1-Tris(hydroxymethyl)-propan-trimethacrylat, Tripropylenglykol-diacrylat, Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der durchschnittlichen allgemeinen Formel (X)

RₐR^{y}_{b}SiO_{(4-a-b)/2} Formel (X)

eingesetzt, wobei hierin
- R: gleich oder verschieden sein kann und einen von aliphatischen Kohlenstoff-Kohlenstoff-Mehrfachbindungen freien, organischen Rest bedeutet,
- R^{y}: gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
- a: 0, 1, 2 oder 3 ist und
- b: 0, 1 oder 2 ist
mit der Maßgabe, dass die Summe a + b kleiner oder gleich 3 ist und im Durchschnitt mindestens 2 Reste R^{y} je Molekül vorliegen.

Beim Rest R in der allgemeinen Formel (X) kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der allgemeinen Formel (X) miteinander verbinden.

R umfasst insbesondere die einwertigen Reste -F, -Cl, -Br, -OR^{x}, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß der allgemeinen Formel (X) Si-gebundene Reste. R^{x} steht dabei allgemein für Wasserstoff oder einen einwertigen, gegebenenfalls substituierten Kohlenwasserstoffrest mit 1 bis 20 Kohlenstoffatomen, bevorzugt für Wasserstoff, Alkylreste und Arylreste.

Beispiele für Rest R^{x} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest.

Beispiele für halogenierte Reste R^{x} sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest.

Bevorzugt handelt es sich bei R^{x} um Wasserstoff, Alkylreste und Arylreste, wobei Wasserstoff, der Methyl- und der Ethylrest besonders bevorzugt sind.

Falls es sich bei Rest R um SiC-gebundene, substituierte Kohlenwasserstoffreste handelt, sind als Substituenten Halogenatome, phosphorhaltige Reste, Cyanoreste, -OR^{x}, -NR^{x}-, -NR^{x}₂, -NR^{x}-C(O)-NR^{x}₂, -C(O)-NR^{x}₂, -C(O)-R^{x}, -C(O)OR^{x}, -SO₂-Ph und -C₆F₅ mit R^{x} gleich der oben genannten Bedeutung und Ph gleich Phenylrest bevorzugt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)ₙ-N(R^{x})C(O)NR^{x}₂,
- (CH₂)ₙ-C(O)NR^{x}₂, -(CH₂)ₙ-C(O)R^{x}, -(CH₂)ₙ-C(O)OR^{x}, -(CH₂)ₙ-C(O)NR^{x}₂,
- (CH₂)ₙ-C(O)-(CH₂)ₘ-C(O)CH₃, -(CH₂)ₙ-NR^{x}-(CH₂)ₘ-NR^{x}₂, -(CH₂)ₙ-O-CO-R^{x}, -(CH₂)ₙ-O-(CH₂)n-CH(OH)-CH₂OH,
- (CH₂)ₙ-(OCH₂CH₂)ₘ-OR^{x}, -(CH₂)ₙ-SO₂-Ph und -(CH₂)ₙ-O-C₆F₅, wobei R^{x} eine oben dafür angegebene Bedeutung hat, n und m hier gleiche oder verschiedene ganze Zahlen zwischen 0 und 10 sind und Ph den Phenylrest bezeichnet.

Beispiele für R gleich zweiwertige, beidseitig gemäß der allgemeinen Formel (X) Si-gebundene Reste sind solche, die sich von den voranstehend für Rest R genannten einwertigen Beispielen dadurch ableiten, dass eine zusätzliche Bindung durch Substitution eines Wasserstoffatoms erfolgt. Beispiele für derartige Reste sind -(CH₂)ₙ-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)n-, -(CH₂)ₙ-C₆H₄-C₆H₄-(CH₂)ₙ-, -(CH₂O)ₘ-, -(CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R^{y} kann es sich um beliebige, einer Anlagerungsreaktion (Hydrosilylierung) mit einer SiH-funktionellen Verbindung zugängliche Gruppen handeln.

Falls es sich bei Rest R^{y} um SiC-gebundene, substituierte Kohlenwasserstoffreste handelt, sind als Substituenten Halogenatome, Cyanoreste und -OR^{x} bevorzugt, wobei R^{x} die oben genannte Bedeutung hat.

Bevorzugt handelt es sich bei Rest R^{y} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,3-Divinyl-tetramethyldisiloxan, handeln, jedoch auch um ein über kettenständige oder endständige Si-gebundene Vinylgruppen verfügendes hochpolymeres Polydimethylsiloxan, z. B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R^{y}R₂SiO_{1/2}, R^{y}RSiO_{2/2} und R₂SiO_{2/2} zusammengesetzt, wobei R und R^{y} die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R^{y}SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der durchschnittlichen allgemeinen Formel (XI)

R_{c}H_{d}SiO_{(4-c-d)/2} Formel (XI)

eingesetzt, worin hier
- R: gleich oder verschieden sein kann und die oben angegebene Bedeutung hat,
- c: 0, 1, 2 oder 3 ist und
- d: 0, 1 oder 2 ist,
mit der Maßgabe, dass die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiHfunktioneller Verbindungen, wie Tetrakis(dimethyl-siloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten.

Falls Siloxane (C) eingesetzt werden, handelt es sich vorzugsweise um solche aus Einheiten der Formeln

RgSiO_{4-g/2}, RₕR^{y}SiO_{3-h/2} und RᵢHSiO_{3-i/2},

wobei hier
- R und R^{y}: die oben angegebene Bedeutung haben,
- g: 0, 1, 2 oder 3 ist,
- h: 0, 1 oder 2 ist und
- i: 0, 1 oder 2 ist,
mit der Maßgabe, dass je Molekül mindestens 2 Reste R^{y} und mindestens 2 Si-gebundene Wasserstoffatome vorliegen.

Beispiele für Organopolysiloxane (C) sind solche aus SiO_{4/2}-, R₃SiO_{1/2}-, R₂R^{y}SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R^{y}SiO_{1/2}-, R₂SiO- und RHSiO-Einheiten mit R und R^{y} gleich der oben genannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C. Organopolysiloxane (C) sind nach in der Chemie gängigen Methoden herstellbar.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäßen Zusammensetzungen, insbesondere die Polyorganosiloxanmassen können wahlweise als Bestandteil (F) weitere Zusätze zu einem Anteil von bis zu 70 Gew.-%, vorzugsweise 0,0001 bis 40 Gew.-%, enthalten. Diese Zusätze können z. B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw. Die Herstellung der erfindungsgemäßen Zusammensetzungen, insbesondere der Organopolysiloxanmassen, kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des erfindungsgemäßen Ruthenium-Katalysators (D) mit einer Mischung aus (A) und (B) bzw. (C), gegebenenfalls (E) und (F). Der erfindungsgemäß eingesetzte Ruthenium-Katalysator (D) kann dabei als Festsubstanz oder als sog. Batch - gleichmäßig mit einer geringen Menge (A) oder (A) mit (E) vermischt - eingearbeitet werden. Die Vermischung erfolgt dabei, abhängig von der Viskosität von (A), beispielsweise mit einem Rührer, in einem Dissolver, auf einer Walze oder in einem Kneter.

Die nachfolgenden Beispiele dienen der Veranschaulichung der erfindungsgemäßen Verwendung, des erfindungsgemäßen Verfahrens und der erfindungsgemäßen Zusammensetzungen und sind in keinster Weise als Einschränkung zu betrachten.

### Beispiele

### Herstellung der Katalysatoren

### Beispiel 1: Synthese von (p-Cymol)Ru(H)₂[(SiMe₂O)ₓSiMe₃]₂ (x ≈ 14)

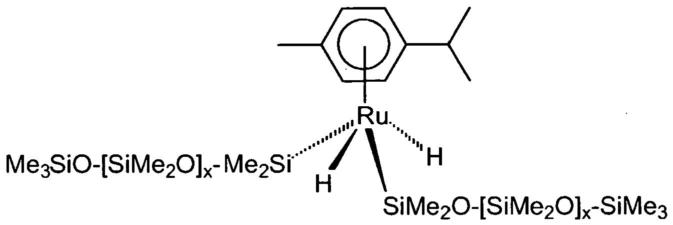

Ein Gemisch aus 50 mg (0.08 mmol) [(*p*-Cymol)RuCl₂]₂ in 10 ml Tetrahydrofuran wird mit 740 mg (ca. 0.67 mmol) HMe₂Si-[O-SiMe₂]ₓ-OSiMe₃ versetzt und 15 h auf 80°C erhitzt. Nach dem Abkühlen werden alle flüchtigen Bestandteile im Vakuum entfernt. Der Rückstand wird in 20 ml n-Pentan aufgenommen, über Florisil filtriert und das Filtrat im Vakuum eingedampft. Es verbleibt ein braunes Öl. Ausbeute 243 mg (62 %). ¹H-NMR (300 MHz, C₆D₆) : d = 5.52 (s, br, 4 H, C₆H₄), 2.44 [sept, 1 H, C*H*(CH₃)₂] , 2.01 (s, 3 H, CH₃) , 1.11 [d, 6 H, (C*H*₃)₂CH], 0.70 [s, 12 H, (C*H*₃)₂Si-Ru], 0.24 - 0.17 [(CH₃)₂Si-O, SiMe₃] , -13.18 ppm (s, 2 H, H-Ru).

### Beispiel 2: Synthese von (p-Cymol)Ru(h⁴-TMDVS)

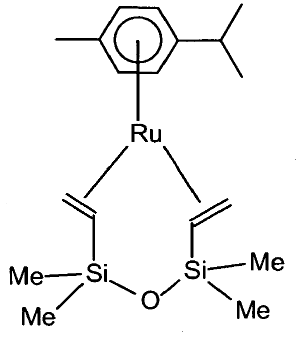

Eine Mischung aus 995 mg (1.63 mmol) [(p-Cymol)RuCl₂]₂, 958 mg (9.03 mmol) Na₂CO₃ (wasserfrei) und 5.75 g (30.8 mmol) Divinyltetramethyldisiloxan in 50 ml Ethanol wird 4 h bei 90°C unter Rückfluss erhitzt. Nach dem Abkühlen werden alle flüchtigen Bestandteile im Vakuum entfernt. Der Rückstand wird mit 50 ml n-Heptan versetzt, 1 h bei 40°C extrahiert und im warmen Zustand über einen vorgewärmten Filter über Celite abfiltriert. Das Filtrat wird auf ein Volumen von 5 ml eingeengt und einer Säulenchromatographie über Al₂O₃ (neutral, Aktivitätsstufe I, Fließmittel n-Pentan) unterworfen. Das Eindampfen der eluierten gelben Zone liefert ein gelb-oranges Öl. Ausbeute 346 mg (25 %).
¹H-NMR (300 MHz, C₆D₆) : d = 4.39 (s, br, 4 H, C₆H₄) , 3.84 - 2.64 (m, 6 H, H₂C=CH-Si), 2.30 [sept, 1 H, C*H*(CH₃)₂], 1.79 (s, 3 H, CH₃), 1.07 [d, 6 H, (C*H*₃)₂CH] , 0.46 (s, 6 H, CH₃Si) , 0.38 ppm (s, 6 H, CH₃Si).

### Untersuchung der katalytischen Eigenschaften

### Beispiel 3: Hydrosilylierung von HMe₂SiO-[SiMe₂O]ₓ-SiMe₂H (x ≈ 13) (H-Polymer 13) mit 3-Vinylheptamethyltrisiloxan und dem Katalysator (p-Cymol)Ru(H)₂[(SiMe₂O)ₓ-SiMe₃]₂ (aus Beispiel 1) bei 160°C

Ein Gemisch aus 2,5 g (ca. 2.63 mmol) H-Polymer 13 und 1,44 g (5.78 mmol) 3-Vinylheptamethyltrisiloxan wird mit 28.4 mg (p-Cymol)Ru(H)₂[(SiMe₂O)ₓ-SiMe₃]₂ (ca. 300 ppm Ru) versetzt (erhältlich durch ein Verfahren gemäß Beispiel 1) und bei 160°C gerührt. Die Analytik der Hydrosilylierungsreaktion (Umsatz, Selektivität, Ausbeute) erfolgt per ¹H-NMR.

| **Reaktionszeit** | **Umsatz [%]** | **Selektivität [%]** | **Ausbeute [%]** |
|---|---|---|---|
| **15 Min.** | 89 | 91 | 81 |
| **1 h** | 97 | 89 | 87 |

**Vergleichsbeispiel 1: Ru-Aren-Katalysator ohne Si-substituierten Ligand; Hydrosilylierung von HMe₁SiO-[SiMe₂O]ₓ**-**SiMe₂H (x ≈ 13) (H-Polymer 13) mit 3-Vinylheptamethyltrisiloxan und dem Katalysator [(*p*-Cymol)RuCl₂]₂ bei 160°C**

Ein Gemisch aus 2,51 g (ca. 2.63 mmol) H-Polymer 13 und 1,44 g (5.78 mmol) 3-Vinylheptamethyltrisiloxan wird mit 4.6 mg [(*p-*Cymol)RuCl₂]₂ (384 ppm Ru) versetzt und bei 160°C gerührt. Die Analytik der Hydrosilylierungsreaktion (Umsatz, Selektivität, Ausbeute) erfolgt per ¹H-NMR.

| **Reaktionszeit** | **Umsatz [%]** | **Selektivität [%]** | **Ausbeute [%]** |
|---|---|---|---|
| **15 Min.** | 84 | 63 | 53 |
| **1 h** | 93 | 66 | 61 |

**Vergleichsbeispiel 2: Pt-Katalysator; Hydrosilylierung von HMe₂SiO-[SiMe₂O]ₓ-SiMe₂H (x ≈ 13) (H-Polymer 13) mit 3-Vinylheptamethyltrisiloxan und dem Karstedt-Katalysator Pt₂ (TVDMS)₃ bei 120°C**

Ein Gemisch aus 2,51 g (ca. 2.63 mmol) H-Polymer 13 und 1,44 g (5.78 mmol) 3-Vinylheptamethyltrisiloxan wird mit 19 µl einer Lösung (2 % Pt) des Karstedt-Katalysators in Xylol (96 ppm Pt) versetzt und bei 120°C gerührt. Die Analytik der Hydrosilylierungsreaktion (Umsatz, Selektivität, Ausbeute) erfolgt per ¹H-NMR.

| **Reaktionszeit** | **Umsatz [%]** | **Selektivität [%]** | **Ausbeute [%]** |
|---|---|---|---|
| **15 Min.** | 100 | 91 | 91 |

**Beispiel 4: Hydrosilylierung von HMe₂SiO-[SiMe₂O]ₓ-SiMe₂H (x ≈ 13) (H-Polymer 13) mit 3-Vinylheptamethyltrisiloxan und dem Katalysator (*p*-Cymol)Ru(h⁴-TMDVS) (aus Beispiel 2) bei 120°C**

Ein Gemisch aus 2,5 g (ca. 2.63 mmol) H-Polymer 13 und 1,44 g (5.78 mmol) 3-Vinylheptamethyltrisiloxan wird mit 5.1 mg (p-Cymol)Ru(h⁴-TMDVS) (ca. 300 ppm Ru) versetzt (erhältlich durch ein Verfahren gemäß Beispiel 2) und bei 120°C gerührt. Die Analytik der Hydrosilylierungsreaktion (Umsatz, Selektivität, Ausbeute) erfolgt per ¹H-NMR.

| **Reaktionszeit** | **Umsatz [%]** | **Selektivität [%]** | **Ausbeute [%]** |
|---|---|---|---|
| **15 Min.** | 67 | 73 | 49 |
| **1 h** | 94 | 72 | 68 |

**Beispiel 5: Vernetzung eines α,ω-Divinyl-polydimethylsiloxans mit einem SiH-funktionellen Polysiloxan bei 120°C**

**1**0 g eines α,ω-Divinyl-polydimethylsiloxans, Viskosität η = 500 mPa·s (Wacker-interner Name VIPO 500) werden mit dem Ru-Katalysator (300 ppm Ru bezogen auf die Gesamtmasse des Ansatzes) versetzt, in einem Rundkolben intensiv vermischt und mit 250 mg eines SiH-funktionellen Polysiloxans der Formel Me₃SiO-[Si(H)Me-O]₄₈-SiMe₃ (Wacker-interner Name Vernetzer V24) versetzt und nochmals intensiv vermischt.

Der Ansatz wird in einem vortemperierten Ölbad bei 120°C und 500 U/Min. gerührt. Es wird die Zeit bestimmt, bis der Gelierungsvorgang soweit fortgeschritten ist, dass ein Rühren mit einem "Magnetrührfisch" nicht mehr in vollem Umfang möglich ist.

| **Katalysator** | **Gelierungszeit** |
|---|---|
| (*p*-Cymol)Ru(H)₂(SiEt₃)₂ | 11 Min. 20 s |
| (*p*-Cymol)Ru(H)₂[(SiMe₂O)ₓ-SiMe₃]₂ | 8 Min. 20 s |
| (*p*-Cymol) Ru (h⁴-TMDVS) | 4 Min. 10 s |
| | |

| **Vergleichsbeispiel** | |
|---|---|
| [(p-Cymol)RuCl₂]₂ | 38 Min. |
| [Pt₂ (TMDVS)₃] , "Karstedt-Katalysator" (100 ppm Pt) | < 5 s |

**Beispiel 6: Vernetzung eines α,ω-Divinyl-polydimethylsiloxans mit einem SiH-funktionellen Polysiloxan in dünnen Schichten bei 120°C**

Der Ansatz aus Beispiel 3 wird mit einem Drahtrakel (60 µ) als Schicht auf einen Glasobjektträger aufgezogen und auf einer Heizbank bei 120°C temperiert.

Die Qualität der Vernetzung wird per rub-off-Test bestimmt, der nach bestimmten Zeiten durchgeführt wird, wobei eine Benotung nach folgenden Kriterien erfolgt:
- 6:: flüssiges System
- 5:: flüssiges System mit anvernetzten Zonen
- 4:: vernetzte Schicht, nach 1 Fingerrieb zerstört
- 3:: vernetzte Schicht, nach 2 - 4 Fingerrieben zerstört
- 2:: vernetzte Schicht, nach > 4 Fingerrieben zerstört
- 1:: vernetzte Schicht, die durch Fingerriebe nicht mehr zerstört werden kann

| **Katalysator** | **Objektträger** |
|---|---|
| | 1 Min.: 5 |
| (*p*-Cymol)Ru(H)₂[(SiMe₂O)ₓ- | 5 Min.: 4 |
| SiMe₃]₂ | 10 Min.: 3 |
| | 20 Min.: 2 |
| | 1 Min.: 6 |
| | 5 Min.: 5 |
| (*p*-Cymol)Ru(H)₂(SiEt₃)₂ | 10 Min.: 4 |
| | 20 Min.: 3 |
| | |

| **Vergleichsbeispiele** | |
|---|---|
| | 1 Min.: 6 |
| | 5 Min.. 5 |
| [(*p*-Cymol)RuCl₂]₂ | 10 Min.: 5 |
| | 20 Min.: 5 |
| Ru(CO)₃(PPh₃)₂ | 1 - 20 Min.: 6 |

## Patentansprüche

1. Verbindungen der allgemeinen Formel (4) 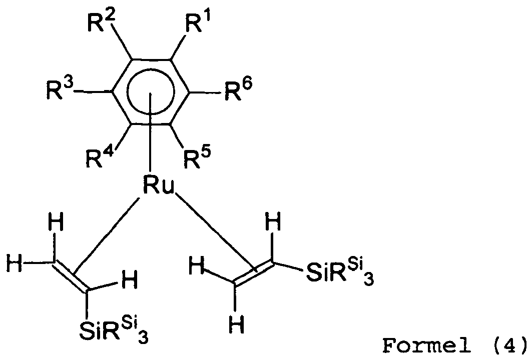 wobei
die beiden SiR^{Si}₃-Reste gleich oder verschieden sein können und dabei R^{Si}₃ insgesamt für einen Rest ausgewählt aus der Gruppe enthaltend Trialkyl, Triaryl, Dialkylhalogen, Diarylhalogen, Alkyl(aryl)halogen, Alkyldihalogen, Aryldihalogen, Trihalogen, Dialkyl(alkoxy), Diaryl(alkoxy), Alkyl(aryl)alkoxy, Alkyl(dialkoxy), Aryl(dialkoxy), Trialkoxy, Me(OSiMe₃)₂, Ph(OSiMe₃)₂, (OSiMe₃)₃, (Dialkylsiloxy)ₙ-SiMe₃, (Diarylsiloxy)ₙ-SiMe₃ und [Alkyl(aryl)siloxy]ₙ-SiMe₃, wobei n jeweils für eine Zahl von 1 bis 500 steht;
und die beiden SiR^{Si}₃-Reste optional über jeweils einen Substituenten R^{Si} miteinander verbunden sein können; und
die Reste R¹ bis R⁶ unabhängig voneinander ausgewählt werden aus der Gruppe enthaltend Wasserstoff (H), Alkyl, Aryl und Alkoxy, SiR^{Si}₃ und OSiR^{Si}₃ mit der Maßgabe, dass die Alkyl-, Aryl- und Alkoxy-Reste optional wiederum mit SiR^{Si}₃ und OSiR^{Si}₃-Resten substituiert sein können und dabei R^{Si}₃ die oben genannte Bedeutung haben soll; und
zwei benachbarte Reste R¹ bis R⁶ optional einen weiteren Ring bilden können.

2. Verbindungen nach Anspruch 1, **dadurch gekennzeichnet, dass** wenn R¹ bis R⁶ für mit SiR^{Si}₃ und OSiR^{Si}₃-Resten substituierte Reste stehen, diese aus der Gruppe enthaltend -(CH₂)ₙ-SiR^{Si}₃, -O-SiR^{Si}₃, -O(CH₂)ₘ-SiR^{Si}₃, - (CH₂)ₘ-OSiR^{Si}₃ und -O(CH₂)ₘ-OSiR^{Si}₃ ausgewählt werden, wobei m für eine ganze Zahl von 1 bis 3 steht und R^{Si}₃ ansonsten jeweils die Bedeutung gemäß Anspruch 1 oder 2 haben soll.

3. Verfahren zur Hydrosilylierung in Gegenwart eines Ruthenium-Katalysators nach Anspruch 1 bis 2, **dadurch gekennzeichnet, dass** der Ruthenium-Katalysator ausgewählt wird aus der Gruppe enthaltend Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶ -gebundenen Arenliganden aufweisen und mindestens einen weiteren Liganden, an den direkt oder über einen Spacer ein Silyl- oder Siloxy-Rest gebunden ist.

4. Verwendung von Ruthenium-Verbindungen nach Anspruch 1 bis 2, ausgewählt aus der Gruppe enthaltend Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶-gebundenen Arenliganden aufweisen und mindestens einen weiteren Liganden, an den direkt oder über einen Spacer ein Silyl- oder Siloxy-Rest gebunden ist, als Hydrosilylierungskatalysatoren.

5. Hydrosilylierbare Zusammensetzungen, enthaltend
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) eine Ruthenium-Verbindung nach Anspruch 1 bis 2, **dadurch gekennzeichnet, dass** die Ruthenium-Verbindung ausgewählt wird aus der Gruppe enthaltend Ruthenium-Komplexe, die in ihrer Ligandensphäre mindestens einen η⁶-gebundenen Arenliganden aufweisen, an den direkt oder über einen Spacer ein Silyl- oder Siloxy-Rest gebunden ist und Ruthenium-Komplexe, die in ihrer Ligandensphäre mindestens einen η⁶-gebundenen Arenliganden aufweisen und mindestens einen weiteren Liganden, an den direkt oder über einen Spacer ein Silyl- oder Siloxy-Rest gebunden ist.

6. Siliconelastomere erhältlich durch Vernetzung der hydrosilylierbaren Zusammensetzungen nach Anspruch 5.

7. Beschichtungen erhältlich durch Vernetzung der hydrosilylierbaren Zusammensetzungen nach Anspruch 5.

## Claims

1. Compounds of the general formula (4) 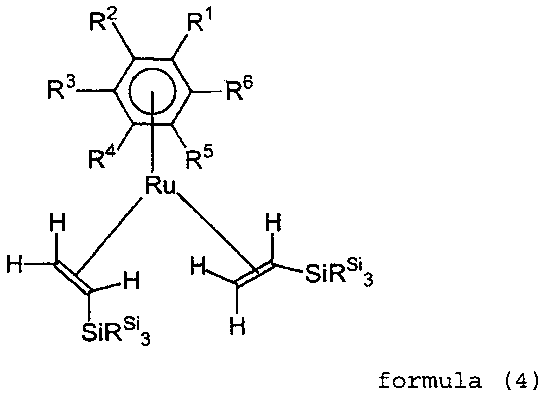 where
the two SiR^{Si}₃ radicals may be the same or different, where R^{Si}₃ overall is a radical selected from the group comprising trialkyl, triaryl, dialkylhalogen, diarylhalogen, alkyl(aryl)halogen, alkyldihalogen, aryldihalogen, trihalogen, dialkyl(alkoxy), diaryl(alkoxy), alkyl(aryl)alkoxy, alkyl(dialkoxy), aryl(dialkoxy), trialkoxy, Me(OSiMe₃)₂, Ph(OSiMe₃)₂, (OSiMe₃)₃, (dialkylsiloxy)ₙ-SiMe₃, (diarylsiloxy)ₙ-SiMe₃ and [alkyl(aryl)siloxy]ₙ-SiMe₃, where n in each case is from 1 to 500;
and the two SiR^{Si}₃ radicals may optionally be joined to one another via an R^{Si} substituent in each case; and
the R¹ to R⁶ radicals are each independently selected from the group comprising hydrogen (H), alkyl, aryl and alkoxy, SiR^{Si}₃ and OSiR^{Si}₃, with the proviso that the alkyl, aryl and alkoxy radicals may optionally in turn be substituted by SiR^{Si}₃ and OSiR^{Si}₃ radicals, where R^{Si}₃ is as defined above; and
two adjacent R¹ to R⁶ radicals may optionally form a further ring.

2. Compounds according to Claim 1, **characterized in that**, when R¹ to R⁶ are radicals substituted by SiR^{Si}₃ and OSiR^{Si}₃ radicals, they are selected from the group comprising -(CH₂)ₙ-SiR^{Si}₃, -O-SiR^{Si}₃, -O(CH₂)ₘ-SiR^{Si}₃, -(CH₂)ₘ-OSiR^{Si}₃ and -O(CH₂)ₘ-OSiR^{Si}₃, where m is an integer of 1 to 3 and R^{Si}₃ is otherwise in each case as defined in Claim 1 or 2.

3. Process for hydrosilylation in the presence of a ruthenium catalyst according to Claim 1 or 2, **characterized in that** the ruthenium catalyst is selected from the group comprising ruthenium complexes which have, in their ligand sphere, at least one η⁶-bonded arene ligand to which is bonded a silyl or siloxy radical directly or via a spacer, and ruthenium complexes which have, in their ligand sphere, at least one η⁶-bonded arene ligand and at least one further ligand to which is bonded a silyl or siloxy radical directly or via a spacer.

4. Use of ruthenium compounds according to Claim 1 or 2 selected from the group comprising ruthenium complexes which have, in their ligand sphere, at least one η⁶-bonded arene ligand to which is bonded a silyl or siloxy radical directly or via a spacer, and ruthenium complexes which have, in their ligand sphere, at least one η⁶-bonded arene ligand and at least one further ligand to which is bonded a silyl or siloxy radical directly or via a spacer as hydrosilylation catalysts.

5. Hydrosilylatable compositions comprising
(A) a compound with at least one aliphatically unsaturated carbon-carbon bond,
(B) a compound with at least one silicon-hydrogen bond and
(D) a ruthenium compound according to Claim 1 or 2, **characterized in that** the ruthenium compound is selected from the group comprising ruthenium complexes which have, in their ligand sphere, at least one η⁶-bonded arene ligand to which is bonded a silyl or siloxy radical directly or via a spacer, and ruthenium complexes which have, in their ligand sphere, at least one η⁶-bonded arene ligand and at least one further ligand to which is bonded a silyl or siloxy radical directly or via a spacer.

6. Silicone elastomers obtainable by crosslinking the hydrosilylatable compositions according to Claim 5.

7. Coatings obtainable by crosslinking the hydrosilylatable compositions according to Claim 5.

## Revendications

1. Composés de formule générale (4) 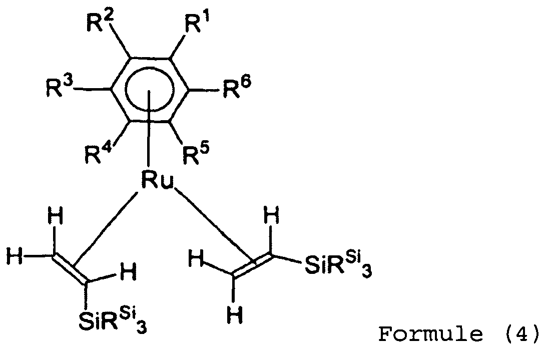 dans laquelle
les deux radicaux SiR^{Si}₃ peuvent être identiques ou différents et R^{Si}₃ représente en l'occurrence au total un radical choisi dans le groupe contenant trialkyle, triaryle, dialkylhalogène, diarylhalogène, alkyl(aryl)halogène, alkyldihalogène, aryldihalogène, trihalogène, dialkyl(alcoxy), diaryl(alcoxy), alkyl(aryl)alcoxy, alkyl(dialcoxy), aryl(dialcoxy), trialcoxy, Me(OSiMe₃)₂, Ph(OSiMe₃)₂, (OSiMe₃)₃, (dialkylsiloxy)ₙ-SiMe₃, (diarylsiloxy)ₙ-SiMe₃ et [alkyl(aryl)siloxy]ₙ-SiMe₃, n représentant à chaque fois un nombre de 1 à 500 ;
et les deux radicaux SiR^{Si}₃ peuvent éventuellement être reliés l'un à l'autre à chaque fois par un substituant R^{Si} ; et les radicaux R¹ à R⁶ sont choisis indépendamment les uns des autres dans le groupe contenant hydrogène (H), alkyle, aryle et alcoxy, SiR^{Si}₃ et OSiR^{Si}₃, à condition que les radicaux alkyle, aryle et alcoxy puissent éventuellement être substitués à leur tour avec des radicaux SiR^{Si}₃ et OSiR^{Si}₃, R^{Si}₃ devant en l'occurrence avoir la signification mentionnée précédemment ; et deux radicaux R¹ à R⁶ voisins peuvent éventuellement former un cycle supplémentaire.

2. Composés selon la revendication 1, **caractérisés en ce que** lorsque R¹ à R⁶ représentent des radicaux substitués avec des radicaux SiR^{Si}₃ et OSiR^{Si}₃, ceux-ci sont choisis dans le groupe contenant -(CH₂)ₙ-SiR^{Si}₃, -O-SiR^{Si}₃, -O (CH₂) ₘ-SiR^{Si}₃, - (CH₂)ₘ-OSiR^{Si}₃ et -O (CH₂) ₘ-OSiR^{Si}₃, m représentant un nombre entier de 1 à 3 et R^{Si}₃ devant sinon avoir à chaque fois la signification selon la revendication 1 ou 2.

3. Procédé d'hydrosilylation en présence d'un catalyseur de ruthénium selon les revendications 1 et 2, **caractérisé en ce que** le catalyseur de ruthénium est choisi dans le groupe contenant les complexes de ruthénium qui comprennent dans leur sphère de ligands au moins un ligand arène relié en η⁶ auquel un radical silyle ou siloxy est relié directement ou par un espaceur, et les complexes de ruthénium qui comprennent dans leur sphère de ligands au moins un ligand arène relié en η⁶ et au moins un autre ligand auquel un radical silyle ou siloxy est relié directement ou par un espaceur.

4. Utilisation de composés de ruthénium selon les revendications 1 et 2, choisis dans le groupe contenant les complexes de ruthénium qui comprennent dans leur sphère de ligands au moins un ligand arène relié en η⁶ auquel un radical silyle ou siloxy est relié directement ou par un espaceur, et les complexes de ruthénium qui comprennent dans leur sphère de ligands au moins un ligand arène relié en η⁶ et au moins un autre ligand auquel un radical silyle ou siloxy est relié directement ou par un espaceur, en tant que catalyseurs d'hydrosilylation.

5. Compositions pouvant être hydrosilylées, contenant :
(A) un composé comprenant au moins une liaison carbone-carbone aliphatiquement insaturée,
(B) un composé comprenant au moins une liaison silicium-hydrogène, et
(D) un composé de ruthénium selon les revendications 1 et 2, **caractérisées en ce que** le composé de ruthénium est choisi dans le groupe contenant les complexes de ruthénium qui comprennent dans leur sphère de ligands au moins un ligand arène relié en η⁶ auquel un radical silyle ou siloxy est relié directement ou par un espaceur, et les complexes de ruthénium qui comprennent dans leur sphère de ligands au moins un ligand arène relié en η⁶ et au moins un autre ligand auquel un radical silyle ou siloxy est relié directement ou par un espaceur.

6. Élastomères de silicone, pouvant être obtenus par réticulation des compositions pouvant être hydrosilylées selon la revendication 5.

7. Revêtements, pouvant être obtenus par réticulation des compositions pouvant être hydrosilylées selon la revendication 5.
